# EUROPÄISCHE PATENTSCHRIFT

(11) **EP 2 732 500 B1**
(45) Veröffentlichungstag und Bekanntmachung des Hinweises auf die Patenterteilung: **16.12.2015**
(21) Anmeldenummer: 12740103.2
(22) Anmeldetag: 13.07.2012
(51) Int. Cl.: H01M 4/92, H01M 8/02, H01M 8/04, H01M 8/20

(54) **LUFTATMENDE BRENNSTOFFZELLE UND ZELLSTAPEL FÜR DIE OXIDATION VON IONEN MIT SAUERSTOFF**
AIR-BREATHING FUEL CELL AND CELL STACK FOR THE OXIDATION OF IONS USING OXYGEN
PILE À COMBUSTIBLE AÉROBIE ET EMPILEMENT DE CELLULES POUR L'OXYDATION D'IONS AVEC DE L'OXYGÈNE

(30) Priorität: 13.07.2011 DE 102011107185
(43) Veröffentlichungstag der Anmeldung: 21.05.2014
(73) Patentinhaber: Fraunhofer-Gesellschaft zur Förderung der angewandten Forschung e.V., 80686 München (DE)
(72) Erfinder: NOACK, Jens, 76327 Pfinztal (DE); BERGER, Thomas, 76327 Pfinztal (DE); TÜBKE, Jens, 76337 Waldbronn (DE); PINKWART, Karsten, 76327 Pfinztal (DE)
(74) Vertreter: Pfenning, Meinig & Partner GbR
(86) Internationale Anmeldenummer: PCT/EP2012/063784
(87) Internationale Veröffentlichungsnummer: WO 2013/007817

(56) Entgegenhaltungen:
- WO-A1-97/24774
- WO-A1-2010/094657
- DE-T2- 69 217 725
- US-A- 4 048 384

## Beschreibung

Die Erfindung beschreibt eine luftatmende Brennstoffzelle für die Oxidation von Ionen mit Luft oder Sauerstoff mit einer Anodenhalbzelle und einer Kathodenhalbzelle. Zwischen den Halbzellen ist eine erste ionenleitende Membran und eine zweite ionenleitende Membran angesiedelt und die zweite ionenleitende Membran ist zumindest bereichsweise auf der zur Kathodenhalbzelle gewandten Seite mit einem Katalysator für die Reduktion von Sauerstoff beschichtet. Erfindungsgemäß ist die luftatmende Brennstoffzelle dadurch gekennzeichnet, dass zwischen den ionenleitenden Membranen eine Oxidationszone für die Oxidation von Ionen mit negativem Standardelektrodenpotential vorgesehen ist.

Ein typisches Beispiel für eine luftatmende Brennstoffzelle aus dem Stand der Technik ist die Vanadium/Luft-Brennstoffzelle (DE 692 17 725 T2), hier als Redox-Batterie bezeichnet. Bei dieser speziellen Ausführung wird an der Anode zweiwertiges Vanadium zu dreiwertigem oxidiert, wobei an der Kathode

Sauerstoff reduziert wird und mit Protonen zu Wasser reagiert.

Die chemischen Reaktionen sind die folgenden:

| | | |
|---|---|---|
| Anode: | V²⁺ → V³⁺ + e⁻ | E° = - 0,255 V |
| Kathode: | O₂ + 4H⁺ + 4e⁻ → 2H₂O | E° = + 1,2 V |

In diesem Fall besteht die elektrochemische Zelle aus zwei Halbzellen, die durch eine ionenleitende (hier: protonenleitende) Membran getrennt sind. An der Kathode erfolgt die Sauerstoffreduktion unter Zuhilfenahme eines Katalysators an einer Kohlenstoffelektrode. Die Katalysator/Kohlenstoffmischung ist auf die Kathodenseite der Membran aufgebracht (Membranelektrodeneinheit) und steht in Kontakt mit einer aus Kohlenstoff bestehenden Gasdifusionsschicht, die wiederum mit einer Kohlenstoffplatte in Kontakt steht. Die Anienhalbzelle besteht aus einer Kohlenstoffplatte, die mit einem porösen Kohlenstoffmaterial in Kontakt ist. Das poröse Kohlenstoffmaterial dient zur Vergrößerung der Oberfläche und damit zur Erhöhung der Leistungsdichte. Das poröse Kohlenstoffmaterial, typischerweise ein Graphitfilz, steht in Kontakt mit der Membran, die auf der Anodenseite keine Katalysatorbeschichtung besitzt.

Ferner wird in diesem Beispiel aus dem Stand der Technik durch die Anodenhalbzelle eine saure Lösung aus zweiwertigen Vanadiumionen gepumpt, während durch die Kathodenhalbzelle Luft hindurch geleitet wird. Es stellt sich eine Klemmspannung zwischen den Kohlenstoffelektroden der beiden Halbzellen ein. Wird der Stromkreis geschlossen, fließen Elektronen von der Anode über den Verbraucher zur Kathode.

Die ionenleitende Membran ist nicht 100 % dicht gegenüber den Medien, so dass die saure Lösung aus zweiwertigen Vanadiumionen durch die Membran an die aufgebrachte Katalysatorschicht gelangt. Dabei findet aufgrund der Potentialunterschiede der Teilreaktionen folgende Reaktion an Edelmetallpartikeln statt:

| | |
|---|---|
| V²⁺ V³⁺ + e⁻ | E° = - 0,255 V |
| 2H⁺ + 2e⁻ H₂ | E° = ± 0,0 V |
| 2V²⁺ + 2H⁺ → 2V³⁺ + H₂↑ | |

Durch die Entstehung von gasförmigem Wasserstoff in der Katalysatorschicht erfolgt eine Veränderung dieser durch z.B. Ablösen einzelner Partikel, was dazu führt, dass die Geschwindigkeit der Sauerstoffreduktionsreaktion und damit die Gesamtleistung der Zelle rasch ab nimmt. Zusätzlich wird dieser Effekt durch Stromfluss durch die Zelle und mit einhergehender Elektromigration von Vanadiumionen zur Kathode beschleunigt.

Dieses Problem wurde durch die Bereitstellung der luftatmenden Brennstoffzelle gemäß Anspruch 1 und des Zellstapels gemäß Anspruch 10 und die Verwendung der luftatmenden Brennstoffzelle gemäß Anspruch 11 gelöst. Die Ansprüche 2-9 beschreiben vorteilhafte Ausführungsformen der luftatmenden Brennstoffzelle.

Generell muss verhindert werden, dass Ionen mit negativem Standardelektrodenpotential zur Katalysatorschicht gelangen können. Am Beispiel von Vanadiumionen muss verhindert werden, dass zweiwertige Vanadiumionen bis zur Edelmetallkatalysatorschicht gelangen können. Dreiwertige Vanadiumionen entwickeln an Platin kein Wasserstoff, da das Standardpotential positiv ist.

Dies wird durch die erfindungsgemäße luftatmende Brennstoffzelle für die Oxidation von Ionen mit Luft oder Sauerstoff mit einer Anodenhalbzelle und einer Kathodenhalbzelle erreicht, wobei zwischen den Halbzellen eine erste ionenleitende Membran und eine zweite ionenleitende Membran angesiedelt ist und die zweite ionenleitende Membran zumindest bereichsweise auf der zur Kathodenhalbzelle gewandten Seite mit einem Katalysator für die Reduktion von Sauerstoff beschichtet ist, dadurch gekennzeichnet, dass zwischen den ionenleitenden Membranen eine Oxidationszone für die Oxidation von Ionen mit negativem Standardelektrodenpotential vorgesehen ist. Die ionenleitende Membran kann als protonenleitende Membran ausgestaltet sein. Durch die Oxidationszone wird erfolgreich verhindert, dass Ionen mit negativem Standardelektrodenpotential zur Katalysatorschicht gelangen können,

In einer vorteilhaften Ausführungsform ist die luftatmende Brennstoffzelle dadurch gekennzeichnet, dass in der Anodenhalbzelle Ionen enthalten sind, welche bevorzugt ausgewählt sind aus der Gruppe bestehend aus V²⁺, U³⁺, Ti³⁺, Ti²⁺, In²⁺, In⁺, Cr²⁺, E²⁺, S₂O₆²⁻, S₂O₄²⁻, S₂O₃⁻, H₂PO₂⁻, HPO₃²⁻, SO₃²⁻, BH₄⁻, Sn²⁺, HSnO₂⁻, AsO₂⁻, SbO₂⁻.

Die luftatmende Brennstoffzelle kann in der Kathodenhalbzelle Sauerstoff und/oder Luft enthalten.

Die Oxidationszone der luftatmenden Brennstoffzelle kann eine Lösung, bevorzugt eine saure Lösung, eine basische Lösung oder eine neutrale Salzlösung, besonders bevorzugt Schwefelsäure und/oder Phosphorsäure bzw. Natronlauge oder Kalilauge und/oder eine Salzlösung von Natriumchlorid und/oder Kaliumchlorid enthalten.

Die Oxidationszone kann erfindungsgemäß eine Zuleitung und eine Ableitung (d.h. eine Zutrittsöffnung und eine Austrittsöffnung) enthalten, welche die Verbindung mit einem Vorratsbehälter ermöglicht. Zusätzlich kann in eine Pumpe in dem Kreislauf für Zirkulation sorgen.

Mit zunehmender Betriebszeit werden sich in der Oxidationszone Ionen (z.B. Vanadium-Ionen) aus der Anodenhalbzelle ansammeln und sich deren Konzentration erhöhen. Spätestens kurz vor Erreichen der Löslichkeitsgrenze der Ionen kann die Lösung durch eine Lösung ohne oder mit weniger Ionen ersetzt werden. Eine weitere Möglichkeit ist die kontinuierliche Abtrennung von Ionen aus der Lösung um ein Ausfallen der Ionen in der Lösung zu verhindern. Die Detektion der Ionenart und Ionenkonzentration kann an beliebiger Stelle erfolgen, bevorzugt innerhalb eines Kreislaufs zwischen Oxidationszone und einem Vorratsbehälter für eine Ionenlösung.

In einer erfindungsgemäßen Ausgestaltungsform enthält die Oxidationszone ein Oxidationsmittel, bevorzugt Sauerstoff und/oder Luft. Da die ionenleitenden Membranen eine Diffusion von Ionen (z.B.V²⁺-Ionen) nicht vollständig verhindern können, könnten diese von der Anodenhalbzelle zur Kathodenhalbzelle und damit zum Katalysator gelangen. Ein geeignetes Oxidationsmittel in der Oxidationszone kann die Ionen oxidieren (z.B. V²⁺-Ionen zu V³⁺-Ionen) und dadurch verhindern, dass die reduzierenden Ionen zum Katalysator der Kathodenhalbzelle gelangen. Dies kann z.B. durch eine Spülung mit Luftsauerstoff als Oxidationsmittel geschehen.

Erfindungsgemäß kann die Oxidationszone auch eine poröse Hilfselektrode enthalten, welche ein Standardelektrodenpotential aufweist, das die Oxidation der Ionen ermöglicht.

In einer bevorzugten Ausgestaltungsform ist die Oxidationszone über eine Zuleitung und Ableitung mit einem Detektor verbunden und/oder enthält einen Detektor. Hierbei ist der Detektor für die Bestimmung der Art und Konzentration an Reduktionsmittel in der Oxidationszone geeignet. Durch eine Detektion der Konzentration und Art der Ionen kann eine Regelung der Zufuhr an Oxidationsmittel (z.B. Luftsauerstoff) erfolgen. Die Detektion von Ionen in der Oxidationszone (z.B. V²⁺ und V³⁺) kann in der Lösung zum Beispiel durch UV-VIS-Spektrometrie oder durch Messung des Potentials zwischen einer Referenzelektrode und einer Kohlenstoffelektrode erfolgen. In einer besonders bevorzugten Ausgestaltungsform ist der Detektor also ein UV/VIS-Spektrometer und/oder ein Spannungsmessgerät.

Die Anodenhalbzelle der luftatmenden Brennstoffzelle kann eine Kohlenstoffplatte und ein poröses Kohlenstoffmaterial, bevorzugt ein Graphitfilz, enthalten, wobei das poröse Kohlenstoffmaterial die Kohlenstoffplatte und die erste ionenleitende Membran kontaktiert.

Die Kathodenhalbzelle enthält bevorzugt eine Kohlenstoffplatte und eine aus Kohlenstoff bestehende Gasdiffusionsschicht, wobei die aus Kohlenstoff bestehende Gasdiffusionsschicht die Kohlenstoffplatte und die zweite ionenleitende Membran kontaktiert.

Der Katalysator der luftatmenden Brennstoffzelle kann ausgewählt sein aus der Gruppe der Edelmetalle, insbesondere Platin, Ruthenium, Palladium und Rhodium, sowie deren Legierungen.

Die Ionenlösung der Anionenhalbzelle kann durch eine Zuleitung und eine Ableitung (d.h. eine Zutrittsöffnung und eine Austrittsöffnung) mit einem Vorratsbehälter verbunden sein. Für die Zirkulation an Ionenlösung kann der Kreislauf eine Pumpe enthalten.

In einer erfindungsgemäßen Ausgestaltungsform enthält die Kathodenhalbzelle eine Zuleitung und Ableitung (d.h. eine Zutrittsöffnung und eine Austrittsöffnung) für Luft bzw. Sauerstoff. Hierbei kann Luft bzw. Sauerstoff von einer Quelle über ein Ventil über die Zutrittsöffnung in die Kathodenhalbzelle gelangen. Mit Zunahme an Betriebszeit der Zelle und mit Zunahme der Konzentration an Ionen in der Oxidationszone werden vermehrt Ionen in die Kathodenhalbzelle gelangen. Durch entstandenes Wasser werden diese mit dem Luft bzw. Sauerstoffstrom über die Austrittsöffnung in einen Abscheidungstank geleitet.

Die Luft bzw. der Sauerstoff können von dem Abscheidungstank weiter in den Vorratstank für Oxidationsmittel geleitet werden um verbrauchtes Oxidationsmittel zu regenerieren (Oxidation durch Sauerstoff). Überschüssige Luft/Sauerstoff kann über eine Abluftöffnung im Vorratstank für Oxidationsmittel austreten.

Die erfindungsgemäße luftatmende Brennstoffzelle kann durch Stapeln von mehreren einzelnen Zellen zu einem Zellstapel (Stack) zusammengefügt werden. Die Zellstapel können hierbei parallel oder in Serie elektrisch verschaltet werden. Die einzelnen Zellen können so elektrisch verschaltet werden, dass die Zellstapelspannung die Summe der Einzelzellspannungen der Zellen ist.

Im Sinne der Erfindung kann die luftatmenden Brennstoffzelle oder der Zellstapel als Batterie verwendet werden.

Anhand der nachfolgenden Figuren und Beispiele soll der erfindungsgemäße Gegenstand näher erläutert werden, ohne diesen auf die hier dargestellten spezifischen Ausführungsformen einschränken zu wollen.
Figur 1 skizziert den Aufbau einer erfindungsgemäßen Ausgestaltung einer luftatmenden Brennstoffzelle.
Figur 2 skizziert ein bevorzugtes System zum Betrieb einer bevorzugten Ausführung der luftatmenden Brennstoffzelle.
Figur 3 illustriert die Ergebnisse eines Entladeversuches einer erfindungsgemäßen luftatmenden Brennstoffzelle.
Figur 4 fasst das Ergebnis der experimentell ermittelten Zellspannung und des ermittelten Nernstpotentials im Hohlraum einer erfindungsgemäßen Brennstoffzelle zusammen.

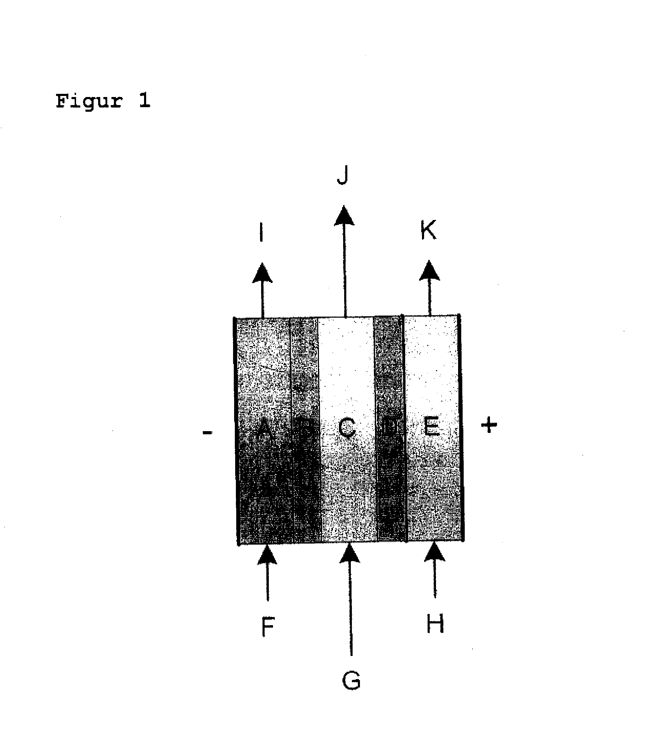

Figur 1 stellt den Aufbau einer erfindungsgemäßen luftatmenden Brennstoffzelle dar. Die Brennstoffzelle enthält eine Anodenhalbzelle A und eine Kathodenhalbzelle E. Zwischen den beiden Halbzellen A, E ist eine erste ionenleitende Membran B und eine zweite ionenleitende Membran D angesiedelt, Die erste ionenleitende Membran B ist an der zur Kathodenhalbzelle E gewandten Seite der Anodenhalbzelle A angeordnet während die zweite ionenleitende Membran D an der zur Anodenhalbzelle A gewandten Seite der Kathodenhalbzelle E angeordnet ist. Die ionenleitende Membran D enthält kathodenseitig eine Beschichtung mit Katalysator für die Reduktion von Sauerstoff. Zwischen den ionenleitenden Membranen B, D ist eine Oxidationszone C für die Oxidation von Ionen mit negativem Standardelektrodenpotential lokalisiert. Darüberhinaus enthält die Anodenhalbzelle A eine Zutrittsöffnung F und eine Austrittsöffnung I für eine Ionenlösung, die Kathodenhalbzelle E enthält eine Zutrittsöffnung H und eine Austrittsöffnung K für Luft/Sauerstoff und die Oxidationszone C enthält eine Zutrittsöffnung G und eine Austrittsöffnung J für eine oxidierende Lösung (z.B. eine saure oder basische Lösung enthaltend Luftsauerstoff).

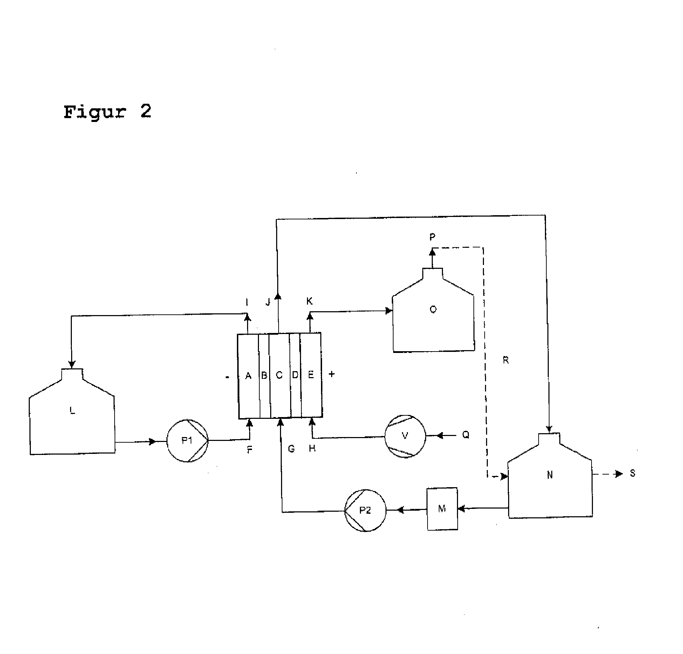

Figur 2 beschreibt ein bevorzugtes System zum Betrieb der erfindungsgemäßen luftatmenden Brennstoffzelle. Die Brennstoffzelle ist aufgebaut wie in Figur 1 beschrieben. Im Betrieb wird aus einem Vorratstank für eine lonenlösung L die Ionenlösung über die Pumpe P1 durch die Eintrittsöffnung F in die Anodenhalbzelle A und aus der Austrittsöffnung I wieder zurück in den Vorratstank L gepumpt. Aus einem Vorratstank für eine saure oder basische Lösung N wird die Lösung über die Pumpe P2 durch die Messstelle M (z.B. ein UV/VIS-Spektrometer) durch die Eintrittsöffnung G die Oxidationszone C und aus der Austrittsöffnung J zurück in den Vorratstank N gepumpt. Über eine Quelle von Luft/Sauerstoff Q wird durch das Ventil V über die Eintrittsöffnung H die Luft/der Sauerstoff in die Kathodenhalbzelle E geleitet und durch die Austrittsöffnung K und in einen Tank O zur Abscheidung von Wasser/Metallionen/Luft geleitet. Der Tank O enthält eine Austrittsöffnung für Luft/Sauerstoff, durch welche Luft/Sauerstoff optional zum Vorratstank für die saure oder basische Lösung N geführt werden kann um die Lösung mit Luft/Sauerstoff zu sättigen. In diesem Fall enthält der Vorratstank N eine Abluftöffnung S, welche überschüssige Luft/Sauerstoff abführt und den Gasdurchfluss gewährleistet.

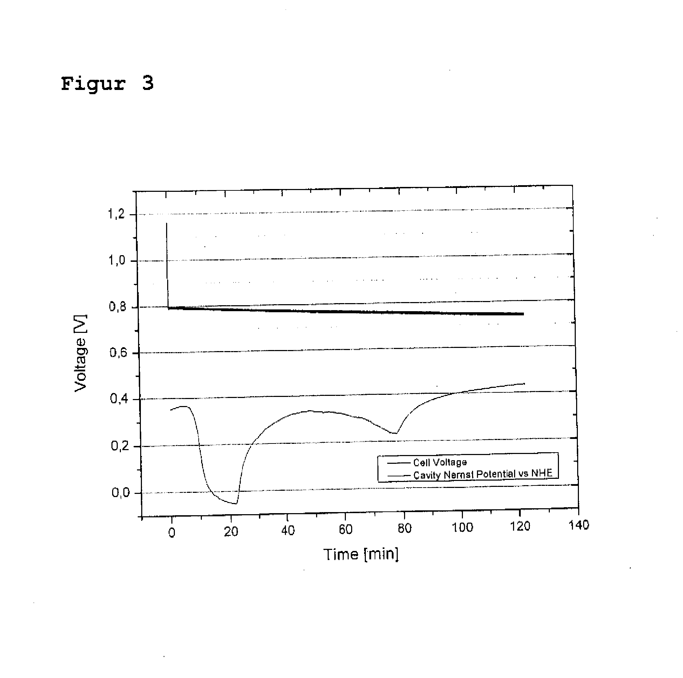

Figur 3 beschreibt die Zellspannung und Potentiale einer luftatmenden Vanadium/Sauerstoff Brennstoffzelle mit zwei Membranen und Zwischenraum. Mit Beginn der Messung und damit des Stromflusses sank die Zellspannung von 1,35 V auf 0,85 V. Nach 8 Stunden wurde die Entladeschlussspannung von 0 V erreicht. Die entnommene Kapazität betrug ca. 8 Ah, was 93 % des theoretischen Wertes darstellte. Das gemessene Nernstpotential im Hohlraum hatte zu Beginn einen Wert von ca. +0,25 V, fiel rasch auf einen Wert von ca. 70 mV, um im weiteren Verlauf schließlich wieder anzusteigen.

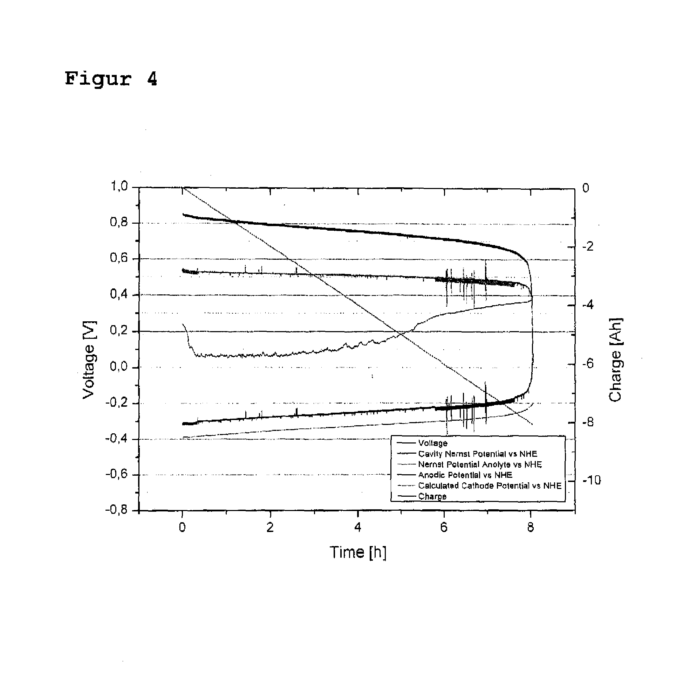

Figur 4 beschreibt die Zellspannung und das Nernstpotential im Hohlraum einer luftatmenden Vanadium/Sauerstoff Brennstoffzelle unter Variation des Volumenstroms von Luft als Oxidationsmittel für Vanadiumionen im Flüssigkeitskreislauf des Hohlraumes C. Die Luftdurchspülung des Hohlraumes C wurde ca. 7 Minuten nach der Entladung abgestellt und erst ca. 14 Minuten später wieder angestellt. Nach Abstellen der Luftdurchspülung sinkt das Potential drastisch fast auf 0 ab um nach erneutem Anstellen wieder anzusteigen.

### Beispiel 1

Nach dem Schema in Figur 1 wurde eine Zelle mit 51 cm² geometrisch aktiver Membranfläche aufgebaut. Die Membranelektrodeneinheit bestand aus NAFION^{®} 117 (DuPont, USA) mit einer einseitigen Beschichtung aus einer Mischung von Platin und Kohlenstoff. Die Platinbeladung entsprach 2 mg/cm². Die Membran zwischen Anodenhalbzelle und Hohlraum war NAFION^{®} 117 (DuPont, USA). Eine Gasdiffusionselektrode (25 BC, SGL-Carbon, Deutschland) befand sich zwischen der beschichteten Seite der Membranelektrodeneinheit und einer Graphitkompositplatte (PPG 86, Eisenhuth, Deutschland) mit Durchflusskanälen. Eine Graphitkompositplatte vom gleichen Typ, ohne Durchflusskanäle wurde als Elektrode in der Anodenhalbzelle eingesetzt. Zwischen Graphitkompositplatte und Membran befand sich ein 5 mm dicker Graphitfilz (GFA5, SGL-Carbon, Deutschland). Der Hohlraum zwischen Anodenhalbzelle und Kathodenhalbzelle hatte eine Dicke von 30 mm und erlaubte die Platzierung je einer Glaskohlenstoffelektrode und einer Hg/Hg₂SO₄-Referenzelektrode. Die beiden Halbzellen und der Hohlraum besaßen Zu- und Ableitungen für flüssige Medien. Die Anodenhalbzelle wurde mit 200 mL einer Lösung aus 1,6 M VSO₄ in 2 M H₂SO₄ und 0,05 M H₃PO₄ aus einem Vorratsbehälter kontinuierlich durchspült. Die theoretische Kapazität betrug 8,6 Ah. Der Hohlraum wurde aus einem Vorratsbehälter mit einer wässrigen 2 M H₂SO₄ kontinuierlich durchspült. Die Schwefelsäurelösung wurde im Vorratsbehälter mit Luft durchspült. Durch die Kathodenhalbzelle wurde mit Hilfe eines Massendurchflussreglers Luft mit einem Volumenstrom von 60 mL/min in einen Vorratsbehälter geleitet. Der Vorratsbehälter diente zum Auffangen von entstandenem Wasser. Die Entladeversuche erfolgten mit einem Potentiostaten (Modulab, Solartron, USA) mit nachgeschaltetem Verstärker (Boost 12V/20A, Solartron, USA) bei einem Entladestrom von 1 A. Das starke Abfallen des Nernstpotentials zu Beginn der Messung (siehe Figur 3) kann mit einer verstärkten Zunahme an zweiwertigen Vanadiumionen im Hohlraum durch Elektromigration unter Stromfluss erklärt werden. Die Zunahme der Konzentration an bivalentem Vanadium erfolgte bis zum Gleichgewicht der Oxidation zum trivalenten Vanadium durch die Spülung der Lösung mit Luftsauerstoff. Das weitere Ansteigen des Potentials und damit die Abnahme der Konzentration an bivalentem Vanadium erfolgte durch die Abnahme der Konzentration an bivalentem Vanadium im Anolyten.

### Beispiel 2

In einem weiteren Experiment wurde die Luftdurchspülung der gemäß Beispiel 1 hergestellten Brennstoffzelle nach einer Entladezeit von ca. 7 Minuten abgestellt. Ab diesem Zeitpunkt fiel das Potential bis auf einen kritischen Wert von ca. -0,05 V. Die Wiederaufnahme der Luftdurchspülung ließ bivalentes Vanadium (V²⁺) oxidieren und das Potential wieder steigen (siehe Figur 4). Der Versuch wurde unmittelbar danach wiederholt, allerdings die Luftzufuhr nicht vollständig abgeschaltet, sondern der Volumenstrom vermindert und schließlich wieder erhöht.

## Patentansprüche

1. Luftatmende Brennstoffzelle für die Oxidation von Ionen mit Luft oder Sauerstoff mit einer Anodenhalbzelle (A) und einer Kathodenhalbzelle (E), wobei zwischen den Halbzellen (A, E) eine erste ionenleitende Membran (B) und eine zweite ionenleitende Membran (D) angesiedelt ist und die zweite ionenleitende Membran zumindest bereichsweise auf der zur Kathodenhalbzelle (E) gewandten Seite mit einem Katalysator für die Reduktion von Sauerstoff beschichtet ist,
**dadurch gekennzeichnet, dass** zwischen den ionenleitenden Membranen (B, D) eine Oxidationszone (C) für die Oxidation von Ionen mit negativem Standardelektrodenpotential vorgesehen ist.

2. Luftatmende Brennstoffzelle gemäß Anspruch 1, **dadurch gekennzeichnet, dass** in der Anodenhalbzelle (A) Ionen enthalten sind, bevorzugt Ionen ausgewählt aus der Gruppe bestehend aus V²⁺, U³⁺, Ti³⁺, Ti²⁺, In²⁺, In⁺, Cr²⁺, Eu²⁺, S₂O₆²⁻, S₂O₄²⁻, S₂O₃⁻, H₂PO₂⁻, HPO₃²⁻, SO₃²⁻, BH₄⁻, Sn²⁺, HSnO₂⁻, AsO₂⁻, SbO₂⁻.

3. Luftatmende Brennstoffzelle gemäß einem der vorhergehenden Ansprüche, **dadurch gekennzeichnet, dass** in der Kathodenhalbzelle (E) und/oder in der Oxidationszone (C) ein Oxidationsmittel enthalten ist, bevorzugt Sauerstoff und/oder Luft.

4. Luftatmende Brennstoffzelle gemäß einem der vorhergehenden Ansprüche, **dadurch gekennzeichnet, dass** die Anodenhalbzelle (A) eine Kohlenstoffplatte und ein poröses Kohlenstoffmaterial, bevorzugt ein Graphitfilz, enthält, wobei das poröse Kohlenstoffmaterial die Kohlenstoffplatte und die erste ionenleitende Membran (B) kontaktiert.

5. Luftatmende Brennstoffzelle gemäß einem der vorhergehenden Ansprüche, **dadurch gekennzeichnet, dass** die Kathodenhalbzelle (E) eine Kohlenstoffplatte und eine aus Kohlenstoff bestehende Gasdiffusionsschicht enthält, wobei die aus Kohlenstoff bestehende Gasdiffusionsschicht die Kohlenstoffplatte und die zweite ionenleitende Membran (D) kontaktiert.

6. Luftatmende Brennstoffzelle gemäß einem der vorhergehenden Ansprüche, **dadurch gekennzeichnet, dass** die Oxidationszone (C)
a) eine saure Lösung, bevorzugt Schwefelsäure und/oder Phosphorsäure; oder
b) eine basische Lösung, bevorzugt Natronlauge und/oder Kalilauge; oder
c) eine neutrale Salzlösung, bevorzugt Natriumchlorid und/oder Kaliumchlorid,
enthält.

7. Luftatmende Brennstoffzelle gemäß einem der vorhergehenden Ansprüche, **dadurch gekennzeichnet, dass** die Oxidationszone (C) eine poröse Hilfselektrode enthält, welche ein Standardelektrodenpotential aufweist, das die Oxidation der Ionen ermöglicht.

8. Luftatmende Brennstoffzelle gemäß einem der vorhergehenden Ansprüche, **dadurch gekennzeichnet, dass** der Katalysator ausgewählt ist aus der Gruppe bestehend aus Edelmetallen, insbesondere Platin, Ruthenium, Palladium und Rhodium, sowie deren Legierungen.

9. Luftatmende Brennstoffzelle gemäß einem der vorhergehenden Ansprüche, **dadurch gekennzeichnet, dass** die Oxidationszone (C) über eine Zuleitung (G) und Ableitung (J) mit einem Detektor (M) verbunden ist und/oder einen Detektor (M) enthält, wobei der Detektor (M) für die Bestimmung der Art und Konzentration an Reduktionsmittel in der Oxidationszone (C) geeignet ist und bevorzugt ein UV/VIS-Spektrometer und/oder ein Spannungsmessgerät ist.

10. Zellstapel aus mehr als einer luftatmenden Brennstoffzelle gemäß einer der vorhergehenden Ansprüche.

11. Verwendung der luftatmenden Brennstoffzelle gemäß einem der Ansprüche 1-9 oder dem Zellstapel gemäß Anspruch 10 als Batterie,

## Claims

1. Air-breathing fuel cell for the oxidation of ions with air or oxygen, having an anode half cell (A) and a cathode half cell (E), a first ion-conducting membrane (B) and a second ion-conducting membrane (D) being introduced between the half cells (A, E), and the second ion-conducting membrane being coated at least in regions on the side orientated towards the cathode half cell (E) with a catalyst for the reduction of oxygen,
**characterised in that** an oxidation zone (C) for the oxidation of ions with negative standard electrode potential is provided between the ion-conducting membranes (B, D).

2. Air-breathing fuel cell according to claim 1, **characterised in that** ions are contained in the anode half cell (A), preferably ions selected from the group consisting of V²⁺, U³⁺, Ti³⁺, Ti²⁺, In2⁺, In⁺, Cr²⁺, Eu²⁺, S₂O₆²⁻, S₂O₄²⁻, S₂O₃⁻, H₂PO₂⁻, HPO₃²⁻, SO₃²⁻, BH₄⁻, Sn²⁺, HSnO₂⁻, AsO₂⁻, SbO₂⁻.

3. Air-breathing fuel cell according to one of the preceding claims, **characterised in that** an oxidant, preferably oxygen and/or air, is contained in the cathode half cell (E) and/or in the oxidation zone (C).

4. Air-breathing fuel cell according to one of the preceding claims, **characterised in that** the anode half cell (A) comprises a carbon plate and a porous carbon material, preferably a graphite felt, the porous carbon material contacting the carbon plate and the first ion-conducting membrane (B).

5. Air-breathing fuel cell according to one of the preceding claims, **characterised in that** the cathode half cell (E) comprises a carbon plate and a gas diffusion layer consisting of carbon, the gas diffusion layer consisting of carbon contacting the carbon plate and the second ion-conducting membrane (D).

6. Air-breathing fuel cell according to one of the preceding claims, **characterised in that** the oxidation zone (C) comprises
a) an acidic solution, preferably sulphuric acid and/or phosphoric acid; or
b) a basic solution, preferably sodium hydroxide solution and/or potassium hydroxide solution; or
c) a neutral salt solution, preferably sodium chloride and/or potassium chloride.

7. Air-breathing fuel cell according to one of the preceding claims, **characterised in that** the oxidation zone (C) comprises a porous auxiliary electrode which has a standard electrode potential which enables the oxidation of the ions.

8. Air-breathing fuel cell according to one of the preceding claims, **characterised in that** the catalyst is selected from the group consisting of noble metals, in particular platinum, ruthenium, palladium and rhodium, and also the alloys thereof.

9. Air-breathing fuel cell according to one of the preceding claims, **characterised in that** the oxidation zone (C) is connected to a detector (M) via a supply line (G) and discharge line (J) and/or comprises a detector (M), the detector (M) being suitable for determining the type and concentration of reduction agent in the oxidation zone (C) and preferably is a UV/VIS spectrometer and/or a voltage measuring device.

10. Cell stack made of more than one air-breathing fuel cell according to one of the preceding claims.

11. Use of the air-breathing fuel cell according to one of the claims 1 - 9 or the fuel stack according to claim 10 as a battery.

## Revendications

1. Cellule à combustible aérobie pour l'oxydation d'ions avec de l'air ou de l'oxygène, comprenant une demi-cellule anodique (A) et une demi-cellule cathodique (E), une première membrane conductrice d'ions (B) et une seconde membrane conductrice d'ions (D) étant fixées entre les demi-cellules (A, E), et la seconde membrane conductrice d'ions étant revêtue au moins en partie sur le côté orienté vers la demi-cellule cathodique (E) avec un catalyseur pour la réduction d'oxygène,
**caractérisée en ce qu'**une zone d'oxydation (C) pour l'oxydation d'ions de potentiel d'électrode standard négatif est prévue entre les membranes conductrices d'ions (B, D).

2. Cellule à combustible aérobie selon la revendication 1, **caractérisée en ce que** des ions sont contenus dans la demi-cellule anodique (A), de préférence des ions choisis dans le groupe constitué par V²⁺, U³⁺, Ti³⁺, Ti²⁺, In²⁺, Cr⁺, Cr²⁺, Eu²⁺, S₂O₆²⁻, S₂O₄²⁻, S₂O₃⁻, H₂PO₂⁻, HPO₃²⁻, SO₃²⁻, BH₄⁻, Sn²⁺, HSnO₂⁻, AsO₂⁻, SbO₂⁻.

3. Cellule à combustible aérobie selon l'une quelconque des revendications précédentes, **caractérisée en ce qu'**un oxydant est contenu dans la demi-cellule cathodique (E) et/ou dans la zone d'oxydation (C), de préférence de l'oxygène et/ou de l'air.

4. Cellule à combustible aérobie selon l'une quelconque des revendications précédentes, **caractérisée en ce que** la demi-cellule anodique (A) contient une plaque de carbone et un matériau de carbone poreux, de préférence un feutre en graphite, le matériau de carbone poreux étant en contact avec la plaque de carbone et la première membrane conductrice d'ions (B).

5. Cellule à combustible aérobie selon l'une quelconque des revendications précédentes, **caractérisée en ce que** la demi-cellule cathodique (E) contient une plaque de carbone et une couche de diffusion de gaz constituée de carbone, la couche de diffusion de gaz constituée de carbone étant en contact avec la plaque de carbone et la seconde membrane conductrice d'ions (D).

6. Cellule à combustible aérobie selon l'une quelconque des revendications précédentes, **caractérisée en ce que** la zone d'oxydation (C) contient
a) une solution acide, de préférence de l'acide sulfurique et/ou de l'acide phosphorique ; ou
b) une solution basique, de préférence de l'hydroxyde de sodium et/ou de l'hydroxyde de potassium ; ou
c) une solution saline neutre, de préférence du chlorure de sodium et/ou du chlorure de potassium.

7. Cellule à combustible aérobie selon l'une quelconque des revendications précédentes, **caractérisée en ce que** la zone d'oxydation (C) contient une électrode auxiliaire poreuse, qui présente un potentiel d'électrode standard qui permet l'oxydation des ions.

8. Cellule à combustible aérobie selon l'une quelconque des revendications précédentes, **caractérisée en ce que** le catalyseur est choisi dans le groupe constitué par les métaux nobles, notamment le platine, le ruthénium, le palladium et le rhodium, ainsi que leurs alliages.

9. Cellule à combustible aérobie selon l'une quelconque des revendications précédentes, **caractérisée en ce que** la zone d'oxydation (C) est raccordée par une conduite d'entrée (G) et une conduite de sortie (J) avec un détecteur (M) et/ou contient un détecteur (M), le détecteur (M) étant approprié pour la détermination du type et de la concentration de réducteur dans la zone d'oxydation (C), et étant de préférence un spectromètre UV/VIS et/ou un appareil de mesure de tension.

10. Pile de cellules constituée de plus d'une cellule à combustible aérobie selon l'une quelconque des revendications précédentes.

11. Utilisation des cellules à combustible aérobies selon l'une quelconque des revendications 1 à 9 ou de la pile de cellules selon la revendication 10 en tant que batterie.
